# EUROPEAN PATENT APPLICATION

(11) **EP 1 315 380 A2**
(43) Date of publication of application: **28.05.2003**
(21) Application number: 02023558.6
(22) Date of filing: 23.10.2002
(51) Int. Cl.: H04N 7/26, H04N 7/30

(54) **Object-based bit rate control method and system thereof**

(30) Priority: 17.11.2001 KR 2001071654
(71) Applicant: LG Electronics Inc., Seoul (KR)
(72) Inventor: Lee, Jin Soo, Songpa-gu, Seoul (KR); Yu, Jae Shin, Gwanak-gu, Seoul (KR); Park, Ki Su, Nowon-gu, Seoul (KR)
(74) Representative: Vetter, Ewald Otto

(57) **Abstract**

An object-based bit rate control method prevents cut-off of video and maintains high quality of video even when a bit rate of a network is seriously lowered. The object is segmented from the image, and significance is imposed on macro blocks included in the segmented object. When the bit rate of the network is lowered, the macro block having high significance is normally encoded and transmitted, and the macro block having low significance is not encoded.

## Description

### BACKGROUND OF THE INVENTION

### 1. Field of the Invention

The present invention relates to a video transmission system, and more particularly to an object-based bit rate control method and system thereof, which can control the bit rate by using Not-coded blocks according to significance of the object.

### 2. Background of the Related Art

In general, when video data including plenty of information is transmitted through a channel having a restricted transmission bandwidth in a video transmission system, a bit rate is controlled according to conditions of a network. Exemplary bit rate control methods include a forward control method for allocating a bit rate in consideration of characteristics of an input image, and a backward control method for determining a parameter of an encoder in consideration of characteristics of a back terminal of a source encoder (namely, output terminal) such as condition information of a buffer (for example, bit rate).

A video encoder for low bit rate communication such as image communication or videophone communication must show superior performance in compression efficiency and low complexity. Therefore, most of the video encoders for low bit rate communication employ the backward control method for controlling the bit rate by regulating a quantization parameter (QP) considering conditions of the buffer.

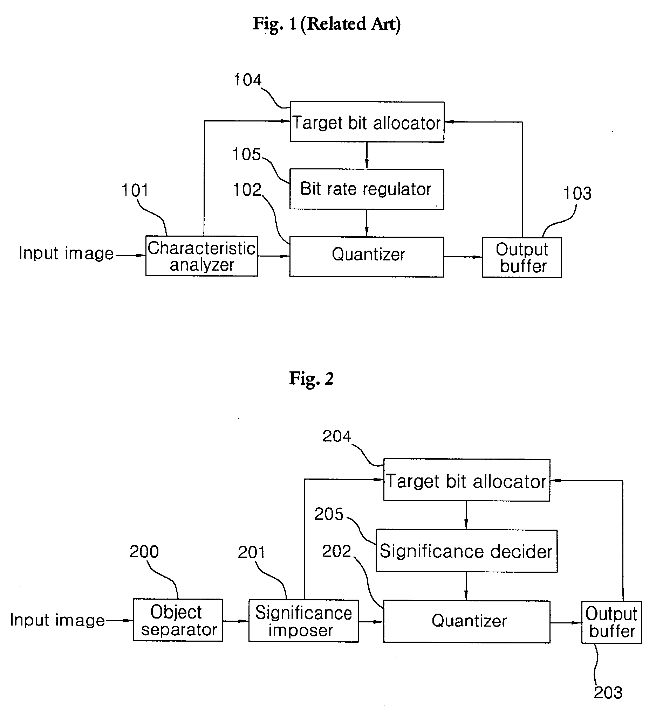

Fig. 1 is a schematic structure view illustrating a conventional bit rate control system, including: a characteristic analyzer 101 for analyzing characteristics of an input image; a quantizer 102 for quantizing the image; an output buffer 103 for outputting the encoded image as a bit stream; a target bit allocator 104 for allocating a target bit on the basis of condition information of the characteristic analyzer 101 and the output buffer 103; and a bit rate regulator 105 for regulating a bit rate according to the allocated target bit.

The characteristic analyzer 101 analyzes the characteristics of the image data and provides the result to the target bit allocator 104, and the target bit allocator 104 allocates the target bit according to the characteristic result of the image data and the condition information of the output buffer 103. The bit rate regulator 105 regulates the bit rate of the quantizer 102 according to the target bit allocated by the target bit allocator 104, and the quantizer 102 encodes the image data according to the regulated bit rate and stores the encoded data in the output buffer 103. The output buffer 103 adjusts the bit stream to be outputted at a predetermined speed and prevents overflow or underflow, which may be generated during bit stream reconstruction.

Here, the bit rate regulator 105 uses the QP as an encoding parameter for regulating the bit rate. For example, when the QP has a large value, the bit rate is decreased but the quality of video is reduced. In the case that the QP has a small value, the bit rate is increased but the quality of video is improved. That is, the quality of video and the bit rate are contrary to each other. Accordingly, when a bandwidth of the network is decreased to lower bit rate, the quality of video is reduced. In the worst case, the video is cut off in a reception side.

However, the method for controlling the bit rate suggests one arithmetic model (for example, linear model, non-linear model, Laplician model, index model, Gaussian model, etc.) for the every video stream, and allocates the bit according to the model. It has the disadvantage that it is difficult to decide an optimal QP for the characteristics or significant region (for example, face, eyes, nose or mouth of a person) of the input image. That is, even if the region is significant, when the bit rate is lowered due to poor network condition, the quality of video is deteriorated. And even if the region is not significant, it can have higher image quality than the significant region due to variations of the network condition. In the case that the bit rate of the network is too low to transmit the video, the video may be cut off in the reception side.

The user of the video communication or videophone is more sensitive to reduction of image quality of the significant or interest region than the insignificant or non-interest region. That is, the image quality of the significant or interest region is a more important factor by which the user judges the quality of video than the video quality of the whole image.

The conventional bit rate control method regulates the QP to adjust the bit rate according to overflow or underflow, and thus has the disadvantage of providing the user with poor quality of image in the significant region which the user is sensitive to.

Moreover, the conventional bit rate control method regulates the QP according to overflow or underflow, and thus fails to provide the user with the high quality of video due to big differences and deterioration of the quality of video according to conditions of the network

### SUMMARY OF THE INVENTION

An object of the invention is to solve at least the above problems and/or disadvantages and to provide at least the advantages described hereinafter.

Accordingly, one purpose of the present invention is to provide an object-based bit rate control method which can control the bit rate according to significance of the object.

Another purpose of the present invention is to provide an object-based bit rate control method which can selectively transmit the object segmented from an image according to significance.

These and other purposes and advantages of the invention are achieved by providing an object-based bit rate control method which includes steps of: imposing significance on at least one macro block included in the object segmented from an image; and encoding and transmitting macro blocks over predetermined significance when a bit rate of a network is low.

Here, macro blocks below the predetermined significance are not encoded but set up as Not-coded blocks. The macro blocks below the predetermined significance duplicate macro blocks of a previous frame located at the same position in a decoding process.

The macro blocks over the predetermined significance are included in a user region of the object divided into the user region and a background region.

The macro blocks included in the user region can have higher significance than the macro blocks included in the background region.

According to another aspect of the invention, an object-based bit rate control method includes steps of: designating Not-coded blocks on the basis of significance imposed on at least one macro block included in the object segmented from an image; and not transmitting the macro blocks designated as the Not-coded blocks when a bit rate of a network is low, but encoding and transmitting macro blocks which are designated as the important blocks..

According to further another aspect of the invention, an object-based bit rate control method includes steps of: imposing significance on at least one macro block included in an object segmented from the image; setting up a network condition; setting up regions having low significance as Not-coded blocks when the network condition is poor; and encoding and transmitting macro blocks which having high significance macroblock although the network condition is poor.

The object-based bit rate control method according to the present invention further includes a step for allocating a target bit on the basis of condition information of the network inputted from an output terminal before judging a setup condition of the Not-coded blocks.

Additional advantages, purposes, and features of the invention will be set forth in part in the description which follows and in part will become apparent to those having ordinary skill in the art upon examination of the following or may be learned from practice of the invention. The purposes and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Fig. 1 is a schematic structure view illustrating a conventional bit rate control system;
Fig. 2 is a schematic structure view illustrating a bit rate control system in accordance with the present invention;
Fig. 3 is a flowchart showing an object-based bit rate control method in accordance with the present invention;
Fig. 4 is an exemplary view showing object segmentation in accordance with the present invention;
Fig. 5 is an exemplary view showing bitrate control using Not-coded blocks in accordance with the present invention; and
Fig. 6 is a block diagram illustrating an encoder using the object-based bit rate control system in accordance with the present invention.

### DETAILED DESCRIPTION OF PREFERRED EMBODIMENTS

The following detailed description will present preferred embodiments of the invention in reference to the accompanying drawings.

Fig. 2 is a schematic structure view illustrating an object-based bit rate control system in accordance with the present invention. Referring to Fig. 2, the bit rate control system includes an object separator 200, a significance imposer 201, a quantizer 202, an output buffer 203, a target bit allocator 204 and a significance decider 205.

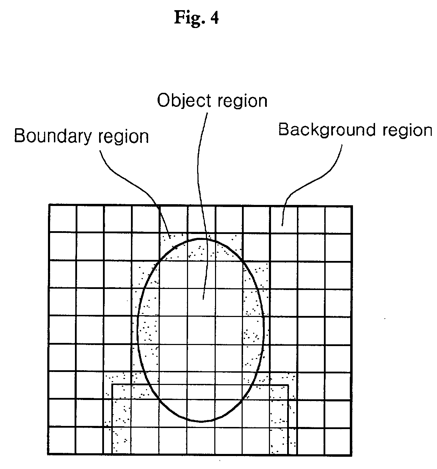

The object separator 200 separates an object from an input image. Here, the object can be segmented using the object segmentation. The segmented object generally includes at least one 16*16 macro block The object is divided into a user region, a background region and a boundary region (Fig. 4). The boundary region indicates a region existing between the user region and the background region. In the case that the object is segmented using the object segmentation, the boundary region can be included in the user region in order to prevent an afterimage from being generated in the boundary region. The user region may include a person, face, eyes, nose, mouth or combinations thereof.

The significance imposer 201 imposes significance on the macro blocks included in the segmented object region. Preferably, the macro block of the user region has higher significance than the macro block of the background region. That is, it implies that the macro block of the user region is more important than that of the background region.

On the other hand, the condition information of a network confirmed in the output buffer 203 is provided to the target bit allocator 204 to allocate a target bit. That is, the target bit allocator 204 senses the current condition of the network on the basis of the condition information from the output buffer 203, and allocates the target bit.

The significance decider 205 confirms a current bit rate of the network according to the target bit allocated by the target bit allocator 204.

In addition, the significance decider 205 confirms the current bit rate of the network, and transmits macro blocks on which the significance imposer 201 imposes significance to the quantizer 202 when the bit rate is high.

Conversely, when the network is not in a good condition due to the low bit rate, the significance decider 205 decides whether the significance-imposed macro blocks have high significance.

The macro blocks having high significance are transmitted to the quantizer 202, and the macro blocks having low significance are set up as Not-coded blocks.

Here, the macro block set up as the Not-coded block does not have encoded data to considerably reduce an amount of transmitted data.

The quantizer 202 encodes the macro blocks on which the significance decider 205 imposes high significance.

The output buffer 203 receives the encoded macro blocks and outputs bit streams. Such bit streams are transmitted through a channel having a restricted bandwidth.

When a multimedia video is transmitted through the network, the object-based bit rate control system separates the object having macro block units from the input image, imposes significance on each macro block, and decides whether to encode and transmit the corresponding macro block or transmit the Not-coded block without encoding according to the bit rate of the network and the significance imposed on the macro blocks.

When it is explained by using moving picture standards such as H.263 or MPEG1/2, the respective frames of the given image are encoded according to prediction encoding. The prediction encoding represents a signal value of a pixel as a differential from a signal value of an image in a different time in order to improve compression efficiency. The prediction encoding is performed only on P or B pictures. The prediction is executed in 16*16 macro block units. A macro block having the most approximate value to a value of a specific macro block of a current picture is detected within a specific range of a previous picture. A difference of the macro blocks is a motion vector that shows how far the current macro block moves from the previous picture. When the current macro block is not moved from the macro block of the previous picture and has not different value from the macro block of the previous picture, the motion vector becomes '0' and a coefficient value for DCT encoding does not exist. Such a macro block is the Not-coded block. It is therefore possible to remarkably reduce an amount of generated data.

Thus, the system of the invention segments the object from the image of transmitting, imposes significance on each macro block, and encodes and transmits the macro blocks having high significance in spite of the low bit rate of the network, thereby preventing omission of important information. In addition, the system of the invention forcibly sets up the macro blocks having low significance as the Not-coded blocks in reduction of the bit rate, to decrease load of data transmission.

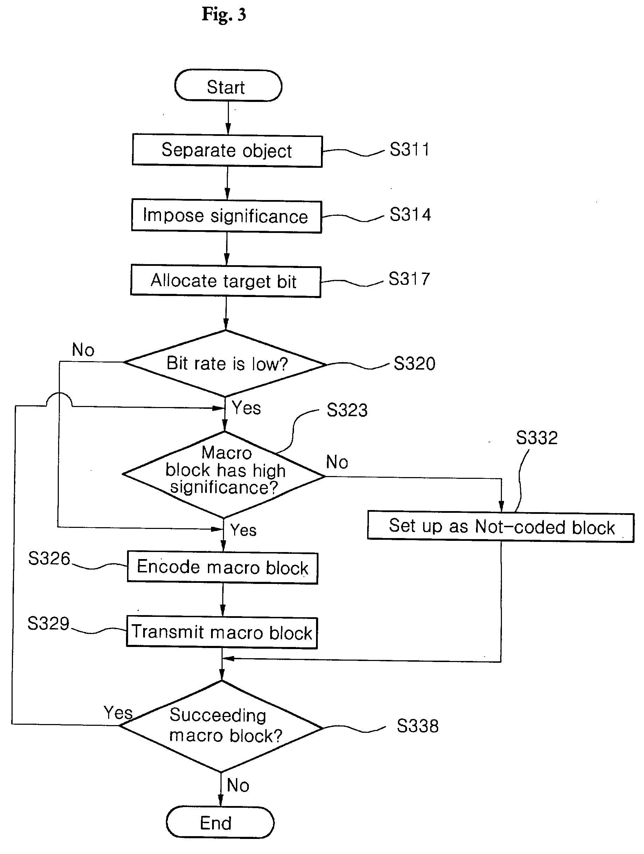

The method for bit rate control by using the Not-coded blocks based on the object will now be explained in detail with reference to Fig. 3.

Fig. 3 is a flowchart showing the object-based bit rate control method in accordance with the present invention. As shown in Fig. 3, the object is segmented from the input image using the object segmentation (step 311). As set forth above, the object may be the user region, background region or boundary region. The object includes at least one macro block according to a size of the region. Here, in order to remove an afterimage that generates in the boundary region, when the user region is segmented from the image, the boundary region can be included in the user region. Accordingly, the user region including the boundary region is segmented to prevent the afterimage from being generated in the boundary region.

In accordance with the present invention, significance is imposed on the macro blocks included in the segmented object (step 314). Here, the macro block of the user region has higher significance than the macro block of the background region.

As described above, the high significance is imposed on the user region because the user region is more sensitive in quality of image than the background region. When the bit rate of the network is lowered, the image quality of the user region having relatively high significance is maintained high, but the image quality of the background region having relatively low significance is decreased in order to satisfy the user and reflect the condition of the network.

Still referring to Fig. 3, the target bit allocator allocates the target bit on the basis of the condition information of the network from the output buffer (step 317).

When the target bit is allocated, the current condition of the network is confirmed with reference to the allocated target bit (step 320). That is, it is confirmed whether the current bitrate of the network is high or low.

When the current bit rate of the network is high, all the macro blocks are encoded according to the setup bit rate, regardless of significance.

In the case that the current bit rate of the network is low, that is the network is not in a good condition, it is impossible to transmit the whole macro blocks with high quality of video.

Therefore, when the current bit rate of the network is low, the significance decider 205 decides whether the significance-imposed macro blocks have high significance (step 323).

As the decision result, the macro block having high significance is encoded and transmitted (steps 326 and 329).

Conversely, the macro block having low significance is set up as the Not-coded block (step 332). When the macro block is set up as the Not-coded block, it implies that the corresponding macro block is not transmitted.

When the macro block set up as the Not-coded block exists, it is not transmitted.

The steps 323 to 338 are performed on the whole macro blocks. That is, whether a succeeding macro block exists is confirmed (step 338). When the succeeding macro block exists, the routine goes to step 323, and when the succeeding block does not exist, the routine is ended.

As explained above, step 311 separates the user region and the background region from the image. Actually, the region sensitive to the user during the communication is the user region. Although the other peripheral region, namely the background region is not sufficiently transmitted to fully display the motion, the user does not feel the stillness of the background region. It is because the user pays attention to the user region of the video and is sensitive to the motion of the user region. As depicted in Fig. 4, when the object of the image is divided into the user region and the background region in macro block units, although the macro blocks of the user region which the user pays attention to are encoded and transmitted and the background region of the previous frame is transmitted as it is instead of encoding the macro blocks of the background region, the user rarely feels the stillness of the background region.

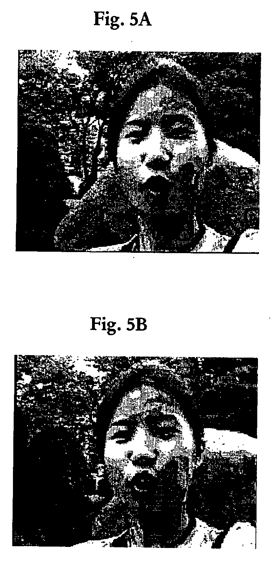

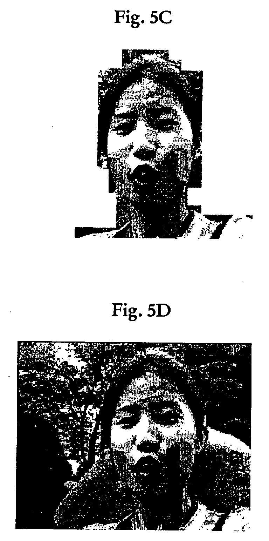

Fig. 5 is an exemplary view showing a motion picture data for explaining this. Here, the user region of Fig. 5C is extracted from the 20th frame image of Fig. 5B. It is notable that the user region is extracted including the boundary region. The boundary region is included in the user region to prevent an afterimage from being generated in the boundary region, thereby providing the user with high quality of video.

As shown in Fig. 5, when the first frame image (Fig. 5A) is compared with the 20th frame image (Fig. 5B), the first frame image and the 20th frame image have different backgrounds. When the user region is extracted from the 20th frame image (Fig. 5C), if the background region excluding the user region is set up as the Not-coded block, the user region extracted from the 20th frame image and the background region of the first frame image are synthesized to display the 20th frame image as shown in Fig. 5D (namely, the background region is set up as the Not-coded block, and thus the background region of the first frame image is used as it is). As illustrated in Fig. 5D, the synthesized 20th frame image has a little difference in the image quality from the 20th frame image which does not exclude the background image (Fig. 5B) due to variations of the boundary region of the user region, but does not cause a big difference in the whole image quality. It is superior to the video quality having the cutoff according to conditions of the network. This technology is embodied using the Not-coded blocks provided by MPEG1/2, 11263, etc.

On the other hand, in the case of the afterimage generated in the boundary region, when the whole frames are re-transmitted per minimum n frames to maintain a certain frame rate transmitted per second, the user does not feels like the background region is stopped or rarely feels the afterimage of the previous frame.

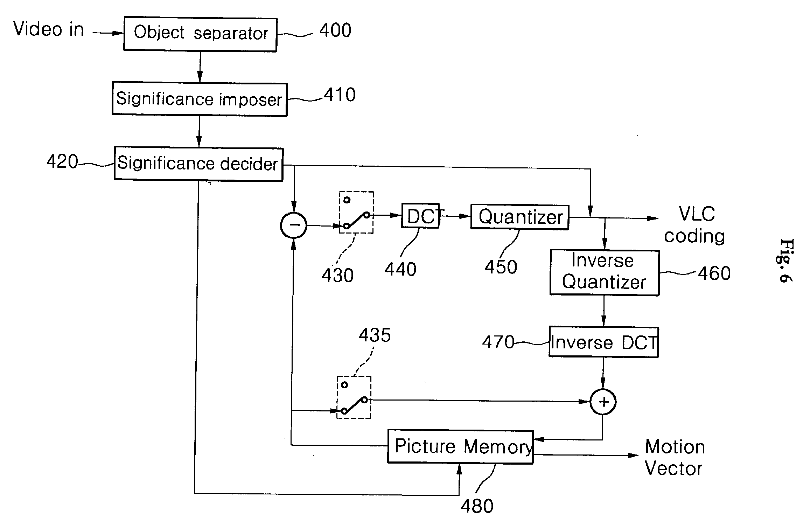

The object-based bit rate control method according to the present invention is applied to the existing encoder as shown in fig. 6. That is, an object separator 400 segments an object from an input image, and a significance imposer 410 imposes significance on at least one macro block included in the segmented object. A significance decider 420 performs DCT and encoding on the macro blocks or sets up them as Not-coded blocks according to significance.

As the decision result of the significance decider 420, a DCT 440 performs DCT on the macro blocks having high significance through a first switch 430, and a quantizer 450 quantizes a DCT coefficient. An inverse quantizer 460 inverse-quantizes the encoded signal, and an inverse DCT 470 performs inverse DCT thereon, so that the restored signal can be stored in a picture memory 480 as an image signal with information selected by a second switch 435. The image signal stored in the picture memory 480 is provided as a signal for the DCT and encoding process.

On the other hand, as the decision result of the significance decider 420, the DCT and encoding are not performed on the macro blocks having low significance.

In the encoder of Fig. 6, when the image is inputted, the object is separated from the image using the object segmentation, and significance is imposed on the respective macro blocks included in the object. Here, when the current bit rate of the network is lowered, significance of the current macro block is decided. When the current macro block has high significance, the corresponding macro block is encoded and transmitted. Conversely, when the current macro block has low significance, the corresponding macro block is not encoded but forcibly set up as the Not-coded block. By controlling the bit rate, the macro blocks can be efficiently transmitted within the range of the target bit allocated according to the network condition.

In this embodiment, the method for efficiently controlling the bit rate in the real time communication condition was described. However, the technology of the invention can be used as a method for encoding motion pictures such as video mail. That is, when a video obtained by a mobile terminal is encoded according to the method of the invention, a size of the whole encoded video can be considerably reduced. Since a fee of a video service is generally charged in packet numbers, the size of the motion pictures is very important.

In accordance with the present invention, the user can set up high significance on the specific object, and thus prevent the cutoff in the reception side when the bit rate is excessively lowered in the video communication.

In addition, only the macro blocks having high significance are transmitted through the network, thereby providing the user with high quality of video and efficiently using the network.

Especially, the method of the present invention is suitable for the radio mobile communication such as the IMT2000. Moreover, the video mail images obtained by the mobile terminal can be efficiently encoded. That is, the video mail image is encoded in a small size without causing loss of important information, to reduce the fee.

While the invention has been shown and described with reference to certain preferred embodiments thereof, it will be understood by those skilled in the art that various changes in form and details may be made therein without departing from the spirit and scope of the invention as defined bythe appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1. An object-based bit rate control method in a system for encoding and transmitting a video in macro block units, comprising the steps of:
imposing significance on at least one macro block included in the object segmented from the image; and
encoding and transmitting macro blocks over predetermined significance when a bit rate of a network is low.

2. The method according to claim 1, wherein macro blocks below the predetermined significance are not encoded but set up as Not-coded blocks.

3. The method according to claim 1 or 2, wherein the macro blocks over the predetermined significance are included in a user region of the object divided into the user region and a background region.

4. The method according to claim 3, wherein a boundary region is further included in the user region.

5. The method according to claim 3 or 4, wherein the user region includes a person, face, eyes, nose, mouth or selective combinations thereof.

6. The method according to at least one of the preceding claims, wherein the macro blocks included in the user region have higher significance than the macro blocks included in the background region

7. An object-based bit rate control method in a system for encoding and transmitting video in macro block units, comprising the steps of:
designating Not-coded blocks on the basis of significance imposed on at least one macro block included in the object segmented from the image;
not transmitting the macro blocks which have lower significance when a bit rate of a network is low;
encoding and transmitting macro blocks which have higher significance when a bit rate of a network is low.

8. The method according to claim 7, wherein the macro blocks designated as the Not-coded blocks have lower significance than the macro blocks which are not designated as the Not-coded blocks.

9. An object-based bit rate control method in a system for encoding and transmitting video in macro block units, comprising the steps of:
imposing significance on at least one macro block included in an object segmented from the image;
setting up a network condition;
setting up regions having low significance as Not-coded blocks when the network condition is poor, and
encoding and transmitting macro blocks which are not set up as the Not-coded blocks when the network condition is poor.

10. The method according to claim 9, further comprising a step of allocating a target bit according to condition information of the network from an output terminal, prior to the step for deciding a setup state of the Not-coded blocks.

11. The method according to claim 9 or 10, wherein the macro blocks which are not set up as the Not-coded blocks are included in a user region of the object divided into the user region and a background region.

12. The method according to at least one of claims 9 to 11, wherein the macro blocks which are not set up as the Not-coded blocks have higher significance than the macro blocks which are set up as the Not-coded blocks.

13. The method according to at least one of claims 9 to 12, wherein the object is segmented from the image using the object segmentation.

14. An object-based bit rate control system for encoding and transmitting video in macro block units, comprising:
a means for segmenting region of interest from an image;
a means for imposing significance on at least one macro block included in the object segmented from the image; and
a means for encoding and transmitting macro blocks over predetermined significance when a bit rate of a network is low.

15. The system according to claim 14, wherein macro blocks below the predetermined significance are not encoded but set up as Not-coded blocks, and wherein the macro blocks over the predetermined significance are included in a user region of the object divided into the user region and a background region.

16. An object-based bit rate control system for encoding and transmitting video in macro block units, comprising:
a mesns for designating Not-coded blocks on the basis of significance imposed on at least one macro block included in the object segmented from the image;
a means for not transmitting the macro blocks which have lower significance when a bit rate of a network is low;
a means for encoding and transmitting macro blocks which have higher significance when a bit rate of a network is low.

17. The system according to claim 16, further comprising a means for replacing a region of lower significance with a still image which are not original background region, and automatically designating the still image region as the Not-coded blocks, wherein the still image replacing the region of lower significance is an image chosen by user or system.

18. An object-based bit rate control system for encoding and transmitting video in macro block units, comprising:
a means for imposing significance on at least one macro block included in an object segmented from the image;
a means for setting up a network condition;
a means for setting up regions having low significance as Not-coded blocks when the network condition is poor; and
a means for encoding and transmitting macro blocks which are not set up as the Not-coded blocks when the network condition is poor.

19. The system according to claim 18, further comprising a means for allocating a target bit according to condition information of the network from an output terminal, prior to the step for deciding a setup state of the Not-coded blocks.

20. The system according to claim 18 or 19, wherein the macro blocks which are not set up as the Not-coded blocks are included in a user region of the object divided into the user region and a background region, wherein such macro blocks have higher significance than the macro blocks which are set up as the Not-coded blocks.
